# EUROPEAN PATENT SPECIFICATION

(11) **EP 4 125 509 B1**
(45) Date of publication and mention of the grant of the patent: **14.05.2025**
(21) Application number: 21776605.4
(22) Date of filing: 25.03.2021
(51) Int. Cl.: A47B 47/00, A47J 39/02, A47F 10/06, H05B 3/30, A47J 36/24, A47B 57/54

(54) **SHELVING AND STORAGE SYSTEM HAVING ADJUSTABLE HEATED SHELVES**
REGAL- UND LAGERSYSTEM MIT EINSTELLBAREN BEHEIZTEN REGALEN
RAYONNAGE ET SYSTÈME DE STOCKAGE À ÉTAGÈRES CHAUFFÉES RÉGLABLES

(30) Priority: 27.03.2020 US 202063000749 P
(43) Date of publication of application: 08.02.2023
(73) Proprietor: InterMetro Industries Corporation, Wilkes-Barre, PA 18705 (US)
(72) Inventor: OLSON, Jeffrey, C., Wilkes-Barre, PA 18705 (US); DUBE, James, P., Wilkes-Barre, PA 18705 (US); ROBINSON, Todd, Wilkes-Barre, PA 18705 (US); RADVANYI, Christopher, M., Wilkes-Barre, PA 18705 (US); STEELE, Robert, R., Wilkes-Barre, PA 18705 (US)
(74) Representative: Inspicos P/S
(86) International application number: PCT/US2021/024153
(87) International publication number: WO 2021/195380

(56) References cited:
- US-A- 3 424 111
- US-A- 4 517 446
- US-A1- 2003 047 553
- US-A1- 2007 138 167
- US-A1- 2008 213 449
- US-A1- 2011 084 576
- US-A1- 2018 266 696
- US-B1- 6 297 481
- US-B1- 6 414 278
- US-B1- 7 059 484
- US-B1- 7 059 484
- US-B1- 9 976 750

## Description

### FIELD

The present disclosure relates to shelving systems, rack systems, cabinets and similar storage systems and, specifically, such systems including adjustable heated shelves.

### BACKGROUND

This section provides background information related to the present disclosure and is not necessarily prior art.

Shelving systems and the like may be used in the food service industry to hold and/or display food items (e.g., pre-packaged food items or prepared food items) that are ready to be picked up and/or delivered to a customer, for example. In some shelving systems, a heating source (e.g., an overhead warmer, heat lamps, etc.) may be used to keep the food items warm until the food is picked up by or delivered to the customer. Such shelving systems may not be readily adaptable to different food items and/or difficult to service (e.g., clean, repair, etc.), for example. Furthermore, such shelving systems are not modular (e.g., cannot reconfigure the shelving system, move shelves, or add or subtract shelves).

The present disclosure provides a shelving and/or storage system that includes one or more self-contained, heated shelves that are adjustable along posts of the shelving and/or storage system, which improves serviceability, functionality and adaptability of the shelving system.

Relevant products may be seen in US2008/213449, US7059484 and US9976750.

### SUMMARY

This section provides a general summary of the disclosure, and is not a comprehensive disclosure of its full scope or all of its features.

The invention relates to the storage system according to claim 1. The storage system provides a self-contained, heated shelf for warming food items. The shelf includes a shelf body defining an interior space and comprising a support surface configured to support the food items. In addition, a heating system is disposed substantially within the interior space of the shelf body, the heating system configured to generate heat to increase the temperature of the support surface to a desired temperature above an ambient temperature. A power control is also included. The shelf body further includes an upper panel and a lower panel attached to the upper panel and enclosing the interior space of the body, an upper side of the upper panel comprises the support surface.

The heating system has a heating circuit including a heating element in a heat transfer relationship with the upper panel of the shelf body and a temperature control device. The heating element is electrically connected to the temperature control device. The heating element is supported within the interior space of the shelf body and is offset a distance from the upper panel so that heat generated by the heating element is transferred to the upper panel primarily by way of radiant heat transfer.

The temperature control device for the heated shelf is configured to enable or interrupt electrical power to the heating element. The temperature control device includes a thermostat electrically connected to heating element that has a temperature sensor probe disposed in the interior space of the shelf body, a thermostat switch and a user control configured to establish a temperature setting of the thermostat comprising a desired temperature for the support surface.

The temperature sensor probe is in thermal communication with the upper panel of the shelf body and configured to detect the temperature of the support surface and provide a signal response to the thermostat switch. The thermostat switch is configured to receive the signal response from the temperature sensor probe and to OPEN or CLOSE based upon the temperature setting of the thermostat.

The heating circuit can also include a temperature sensitive fuse disposed between the thermostat and the heating element and in thermal communication with the upper panel of the shelf body. The temperature sensitive fuse is configured to OPEN if the temperature of the support surface increases beyond a predetermined threshold temperature and interrupt power to the heating element.

The power control can have a power switch attached at a sidewall of the shelf body and extending through an opening in the sidewall. A power cord extending through an opening formed near a periphery of the lower panel of the shelf body can also be included.

The shelf body is generally rectangular and has four corners. A corner mounting structure is located at each of the four corners of the shelf body and comprises a bracket including an aperture extending therethrough and having a conically-shaped inner surface configured to enable the shelf to be attached to a support.

In still another aspect of the disclosure, a storage system is provided having at least four support posts, each support post extending vertically along a longitudinal axis. At least four mounting collars are included, one mounting collar attached to each support post. Each mounting collar has a conical outer surface. At least one heated shelf is supported by the support posts, and the inner surface of the aperture of each corner bracket engages the outer surface of a corresponding mounting collar to support the heated shelf at a vertical location on the support posts. The heated shelf can be positioned at a first one of a plurality of vertical locations along the support posts and be repositioned to a second one of a plurality of vertical locations along the support posts. Further, a plurality of heated shelves can be supported by the support posts and each of the plurality of heated shelves can be individually adjusted (i.e., positioned and repositioned vertically) on the support posts.

The storage system can also include a compartment at least partially enclosing the support surface of the at least one heated shelf. The compartment can have a plurality of walls including a first side wall and a second side wall, at least one door and a closed unheated shelf. The first side wall is located at a first lateral side of the heated shelf and is attached to first and second support posts, and a second side wall is located at a second lateral side of the heated shelf and is attached to third and fourth support posts. At least one door can be a front door located adjacent to a front side of the heated shelf, and the front door can be located adjacent to at least one of the first side wall and the second side wall. The front door can be located adjacent to the support surface of the heated shelf. The unheated shelf can be supported by the support posts at a vertical location above the support surface of the heated shelf and be located adjacent to an upper end of the first side wall and an upper end of the second side wall.

Additionally, a back wall can be located adjacent to a rear side of the heated shelf and attached to the second and fourth second support posts and located adjacent to an upper end of the back wall. Alternatively or in addition, a rear door can be located adjacent to a rear side of the heated shelf and at least one of the first side wall and the second side wall, and the support surface of the heated shelf.

In a still further aspect of the disclosure, one or more divider wall(s) can be positioned within the compartment to separate the compartment into at least a first region and a second region. The divider wall can be attached to the unheated shelf.

In another form, the present disclosure provides a storage system that includes a plurality of posts and a heated shelf. The plurality of posts includes a front right post, a front left post, a rear right post and a rear left post. The heated shelf is connected to and supported by the plurality of posts and is configured to support packaged food items thereon. The heated shelf is adjustable along the posts (i.e., vertically up and down along the longitudinal axes of the posts) and includes a body, a heating assembly and a temperature control device. The body includes a plurality of panels fixed to each other and cooperating to define a cavity. The heating assembly is disposed within the cavity of the body and is configured to transfer heat to an upper panel of the plurality of panels of the body on which the food item(s) are disposed. The temperature control device is associated with one of the panels of the body and is thermally coupled to the heating assembly. The temperature control device is at least partially externally located relative to the heated shelf and is operable to control a temperature of the heated shelf.

In some configurations of the storage system of the above paragraph, the storage system further includes a power switch associated with one of panels of the body and operable between an OFF mode to prevent the heated shelf from being heated and an ON mode allowing the heated shelf to be heated.

In some configurations of the storage system of any one or more of the above paragraphs, the heating assembly includes at least one heating element, a diffuser plate, a bottom cover and an insulation material. The diffuser plate is thermally coupled to the heating element and to the upper panel of the plurality of panels. The diffuser plate uniformly distributes heat from the heating element to the upper panel. The bottom cover is coupled to the body. The insulation material is disposed between the heating element and the bottom cover to restrict heat transfer from the heating element to the bottom cover.

In some configurations of the storage system of any one or more of the above paragraphs, the heating element is a heating coil.

In some configurations of the storage system of any one or more of the above paragraphs, the storage system further includes a plurality of heated shelves connected to and supported by the plurality of posts. Each heated shelf is independently adjustable along the plurality of posts and includes a body and a heating assembly. The body includes a plurality of panels fixed to each other and cooperating to define a cavity. The heating assembly is disposed within the cavity of the body and is configured to transfer heat to an upper panel of the plurality of panels of the body on which food item(s) are disposed. The temperature control device is associated with one of the panels of the body and thermally coupled to the heating assembly. The temperature control device is at least partially externally located relative to the heated shelf and operable to control a temperature of the heated shelf.

In some configurations of the storage system of any one or more of the above paragraphs, the storage system further includes a power switch associated with one of the panels of each heated shelf and is operable between an OFF mode to prevent the heated shelf from being heated and an ON mode allowing the heated shelf to be heated.

In some configurations of the storage system of any one or more of the above paragraphs, the heating assembly of each heated shelf includes at least one heating element, a diffuser plate, a bottom cover and an insulation material. The diffuser plate is thermally coupled to the at least one heating element and to the upper panel of the plurality of panels. The diffuser plate uniformly distributes heat from the heating element to the upper panel. The bottom cover is coupled to the body. The insulation material is disposed between the heating element and the bottom cover to restrict heat transfer from the at least one heating element to the bottom cover.

In some configurations of the storage system of any one or more of the above paragraphs, the heating element is a heating coil.

In another form, the present disclosure provides a storage system that includes a plurality of posts, a first post housing, a second post housing, a heated shelf and a door assembly. The plurality of posts includes a front right post, a front left post, a rear right post and a rear left post. The first post housing is coupled to two posts of the plurality of posts and at least partially houses the two posts therein. The second post housing is coupled to another two posts of the plurality of posts and at least partially houses the other two posts therein. The heated shelf is connected to and supported by the plurality of posts and is configured to support food item(s) thereon. The heated shelf is adjustable along the plurality of posts and includes a body, a heating assembly and a temperature control device. The body includes a plurality of panels fixed to each other and cooperating to define a cavity. The heating assembly is disposed within the cavity of the body and is configured to transfer heat to an upper panel of the plurality of panels of the body on which food item(s) are disposed. The temperature control device is associated with the heated shelf and is operable to control a temperature of the heated shelf. The door assembly is coupled to the heated shelf and cooperates with the first post housing, the second post housing and the heated shelf to define a compartment for the food item(s). The door assembly selectively provides access to the compartment.

In some configurations of the storage system of the above paragraph, the storage system further includes a top shelf that is coupled to an end of the first and second post housings. The top shelf at least partially defines the compartment and is unheated.

In some configurations of the storage system of any one or more of the above paragraphs, the storage system further includes a divider coupled to a middle portion of the top shelf and positioned within the compartment. The divider separates the compartment into a first region and a second region.

In some configurations of the storage system of any one or more of the above paragraphs, the door assembly includes a first door support, a second door support, a first door and a second door. The first door support is coupled to the heated shelf and includes a first lower track and a second lower track. The second door support is coupled to the top shelf and includes a first upper track and a second upper track. The first door has a lower end slidably received in the first lower track and an upper end slidably received in the first upper track. The first door is operable between an open position in which the first region of the compartment is accessible and a closed position in which the first region of the compartment is inaccessible. The second door has a lower end slidably received in the second lower track and an upper end slidably received in the second upper track. The second door is operable between an open position in which the second region of the compartment is accessible and a closed position in which the second region of the compartment is in accessible.

In some configurations of the storage system of any one or more of the above paragraphs, the heating assembly includes at least one heating element, a diffuser plate, a bottom cover and an insulation material. The diffuser plate is thermally coupled to the at least one heating element and to the upper panel of the plurality of panels. The diffuser plate uniformly distributes heat from the heating element to the upper panel. The bottom cover is coupled to the body. The insulation material is disposed between the heating element and the bottom cover to restrict heat transfer from the at least one heating element to the bottom cover.

In some configurations of the storage system of any one or more of the above paragraphs, the storage system further includes another heated shelf connected to and supported by the plurality of posts and configured to support food item(s) thereon. The other heated shelf at least partially defines the compartment and is independently adjustable along the plurality of posts. The other heated shelf includes a body, a heating assembly and a temperature control device. The body includes a plurality of panels fixed to each other and cooperating to define a cavity. The heating assembly is disposed within the cavity of the body and is configured to transfer heat to an upper panel of the plurality of panels of the body on which food items are disposed. The temperature control device is associated with the heated shelf and is operable to control a temperature of another heated shelf.

In some configurations of the storage system of any one or more of the above paragraphs, wherein the storage system further includes a divider coupled to a middle portion of the bottom cover of the heating assembly and positioned within the compartment. The divider being spaced apart from the heated shelf and separating the compartment into a first region and a second region.

In some configurations of the storage system of any one or more of the above paragraphs, the door assembly includes a first door support, a second door support, a first door and a second door. The first door support is coupled to the heated shelf and includes a first lower track and a second lower track. The second door support is coupled to the other heated shelf and includes a first upper track and a second upper track. The first door has a lower end slidably received in the first lower track and an upper end slidably received in the first upper track. The first door is operable between an open position in which the first region of the compartment is accessible and a closed position in which the first region of the compartment is inaccessible. The second door has a lower end slidably received in the second lower track and an upper end slidably received in the second upper track. The second door is operable between an open position in which the second region of the compartment is accessible and a closed position in which the second region of the compartment is in accessible.

In some configurations of the storage system of any one or more of the above paragraphs, the storage system further includes a first power switch associated with the body of the heated shelf and operable between an OFF mode to prevent the heated shelf from being heated and an ON mode allowing the heated shelf to be heated. A second power switch is associated with the body of the other heated shelf and is operable independently of the first power switch between an OFF mode to prevent the other heated shelf from being heated and an ON mode allowing the other heated shelf to be heated.

In some configurations of the storage system of any one or more of the above paragraphs, a first power cord operatively connected to the first power switch extends through one of the first and second post housings and is hidden from view. A second power cord operatively connected to the second power switch extends through one of the first and second post housings and is hidden from view.

In some configurations of the storage system of any one or more of the above paragraphs, the storage system further includes a power strip placed on a ground surface and hidden from view from outside the storage system. The first and second power cords are electrically coupled to the power strip.

In yet another form, the present disclosure provides a shelving system that includes a plurality of support posts, a first post housing, a second post housing, a plurality of heated shelves and a plurality of dividers. Each support post extends vertically along a longitudinal axis. The plurality of posts includes at least four posts comprising a front right post, a front left post, a rear right post and a rear left post. The first post housing is coupled to the front right post and the rear right post of the plurality of posts and encases the front right post and the rear right post therein. The second post housing is coupled to the front left post and the rear left post of the plurality of posts and encases the front left post and the rear left post therein. The plurality of heated shelves are removably connected to and supported by the plurality of support posts and cooperate with each other to define a respective compartment. The plurality of heated shelves comprises an upper surface configured to support packaged food thereon. Each heated shelf is independently adjustable vertically along the longitudinal axes of the plurality of posts and includes a body, a heating assembly, a thermostat and a power switch. The body includes a plurality of panels that cooperate to define a cavity. The plurality of panels includes a thermally-conductive upper panel on which the food is configured to be disposed. The upper panel comprises the upper surface and an interior surface. The heating assembly is disposed within the cavity of the body and is located against the interior surface of the upper panel of the plurality of panels of the body. The thermostat is associated with one of the panels of the body and thermally coupled to the heating assembly. The thermostat is operable to control a temperature of the heated shelf. The power switch is associated with one of the panels of the body and operable between an OFF mode to prevent the heated shelf from being heated and an ON mode allowing the heated shelf to be heated. Each divider is disposed within a respective compartment and coupled to a respective heated shelf such that the divider divides the compartment into a first region and a second region.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 shows a perspective view of a heated shelf assembly not according to the principles of the present disclosure;
FIG. 2 shows an exploded perspective view of a heated shelf assembly as illustrated in FIG. 1;
FIG. 3 is an partial, enlarged, exploded perspective detail view showing a portion of an interior of the a heated shelf assembly as illustrated in FIG. 1;
FIG. 4 is an partial, enlarged detail plan view showing a portion of an interior of the a heated shelf assembly as illustrated in FIG. 1;
FIG. 5 is a cross-sectional view along the line 5-5 of the heated shelf assembly illustrated in FIG. 1;
FIGs. 6 and 7 show schematic views of exemplary heating circuits for the heated shelf assembly according to the principles of the present disclosure;
FIG. 8 shows a perspective view of an open shelving system according to the principles of the present disclosure and including one or more of an adjustable heated shelf assembly according to the principles of the present disclosure;
FIG. 9 is a partial, enlarged exploded perspective view illustrating an adjustable heated shelf assembly according to the principles of the present disclosure and attachment to the vertical posts of a shelving system according to the principles of the present disclosure;
FIG. 10 shows a perspective view of a closed-end shelving system according to the principles of the present disclosure and including one or more of an adjustable heated shelf assembly according to the principles of the present disclosure;
FIG. 11 shows a perspective view of a closed, cabinet-style shelving system with sliding doors according to the principles of the present disclosure (with portions of a side wall panel assembly removed) and including one or more of an adjustable heated shelf assembly according to the principles of the present disclosure and including one or more of an adjustable heated shelf assembly according to the principles of the present disclosure within the cabinet enclosure;
FIG. 12 shows a perspective view of the closed, cabinet-style shelving system with sliding doors of FIG. 11 (with portions of a side wall panel assembly removed) with the doors removed and showing one or more of an adjustable heated shelf assembly according to the principles of the present disclosure within the cabinet enclosure;
FIG. 13 shows a perspective view of a combination open and cabinet-style shelving system according to the principles of the present disclosure and including one or more of an adjustable heated shelf assembly according to the principles of the present disclosure within the cabinet enclosure;
FIG. 14 shows an exploded perspective view of the combination open and cabinet-style shelving system of FIG. 13;
FIG. 15 shows a perspective view of a workstation including an open shelving system according to the principles of the present disclosure and including one or more of an adjustable heated shelf assembly according to the principles of the present disclosure;
FIG. 16 shows a perspective view of a workstation including a closed, cabinet-style shelving system according to the principles of the present disclosure and including one or more of an adjustable heated shelf assembly according to the principles of the present disclosure within the cabinet enclosure;
FIG. 17 shows a standalone closed, cabinet-style shelving system according to the principles of the present disclosure and including one or more of an adjustable heated shelf assembly according to the principles of the present disclosure within the cabinet enclosure;
FIG. 18 shows a perspective view of a heated shelf assembly according to the principles of the present disclosure;
FIG. 19 shows an exploded perspective view of a heated shelf assembly of FIG. 18 but is inverted for clarity; and
FIG. 20 is a cross-sectional view along the line 20-20 of the heated shelf assembly illustrated in FIG. 18.

Corresponding reference numerals indicate corresponding parts throughout the several views of the drawings.

### DETAILED DESCRIPTION

Example embodiments will now be described more fully with reference to the accompanying drawings. Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the invention which is defined by the scope of the appended claims. In some example embodiments, well-known processes, well-known device structures, and well-known technologies are not described in detail.

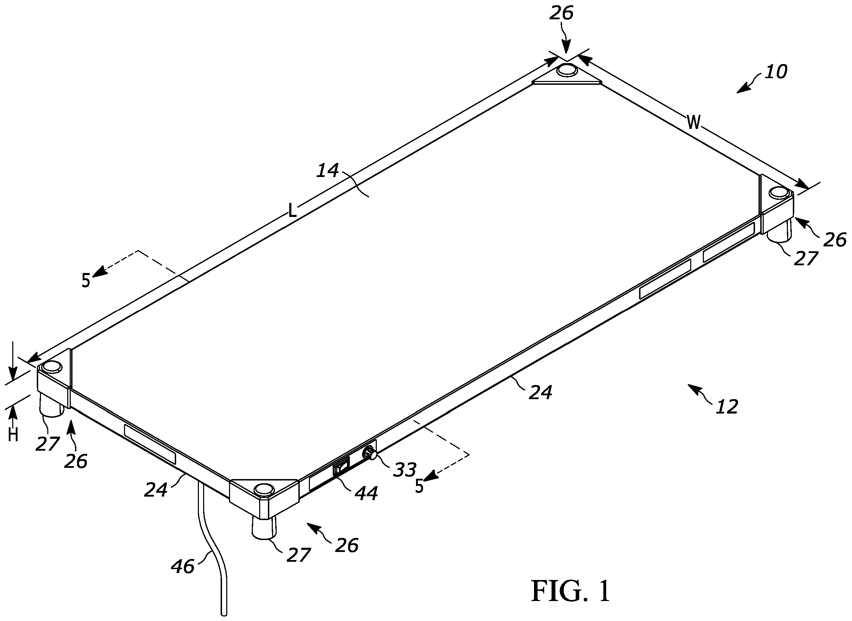

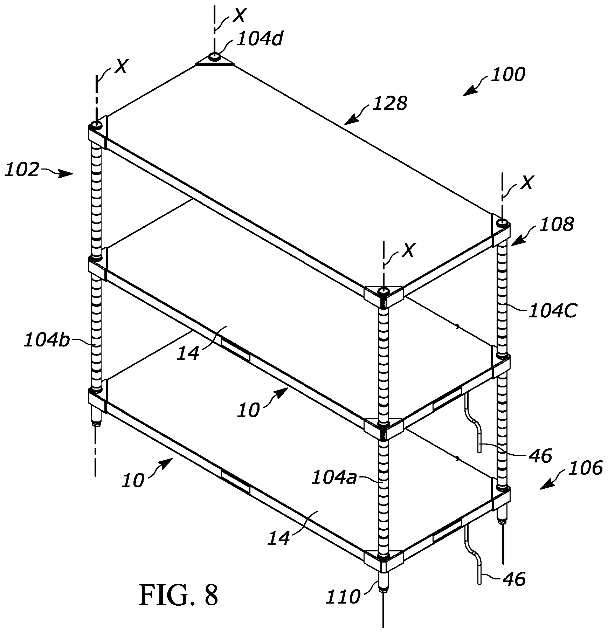

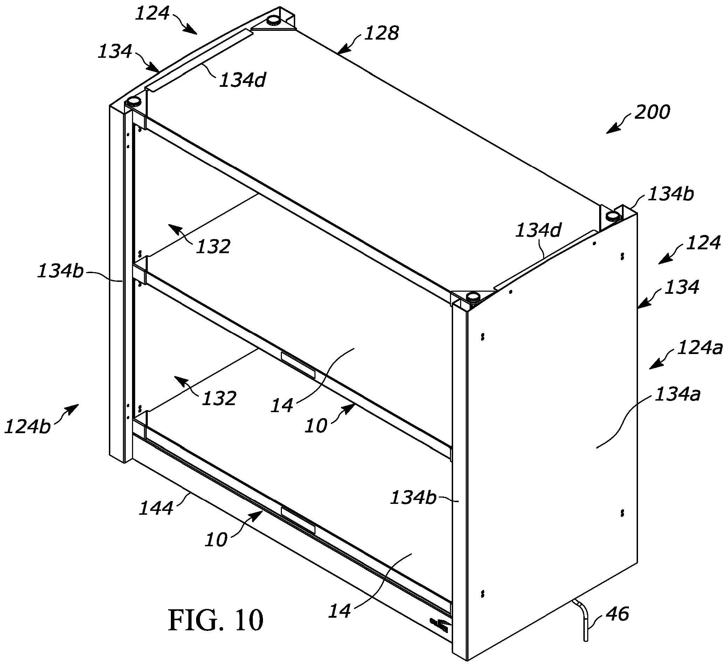

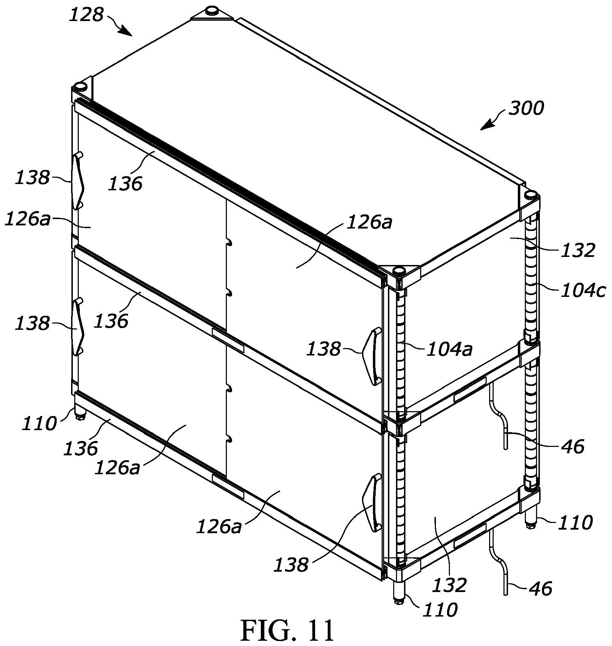

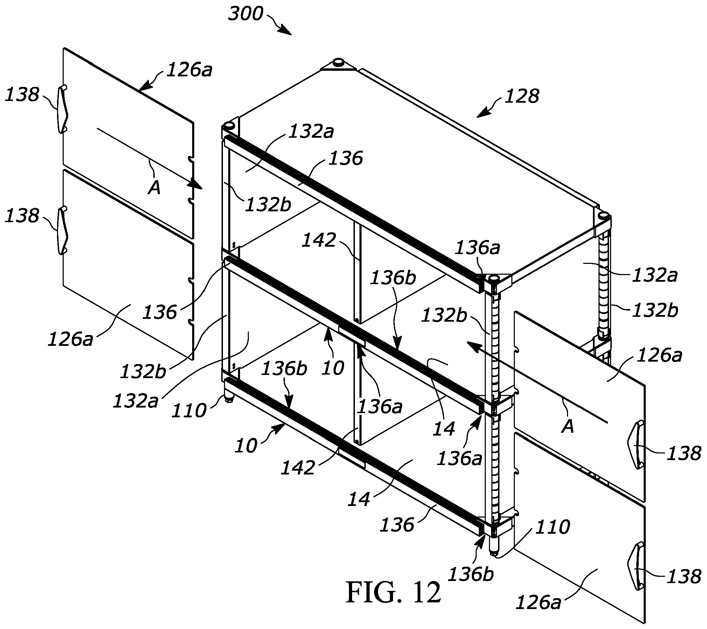

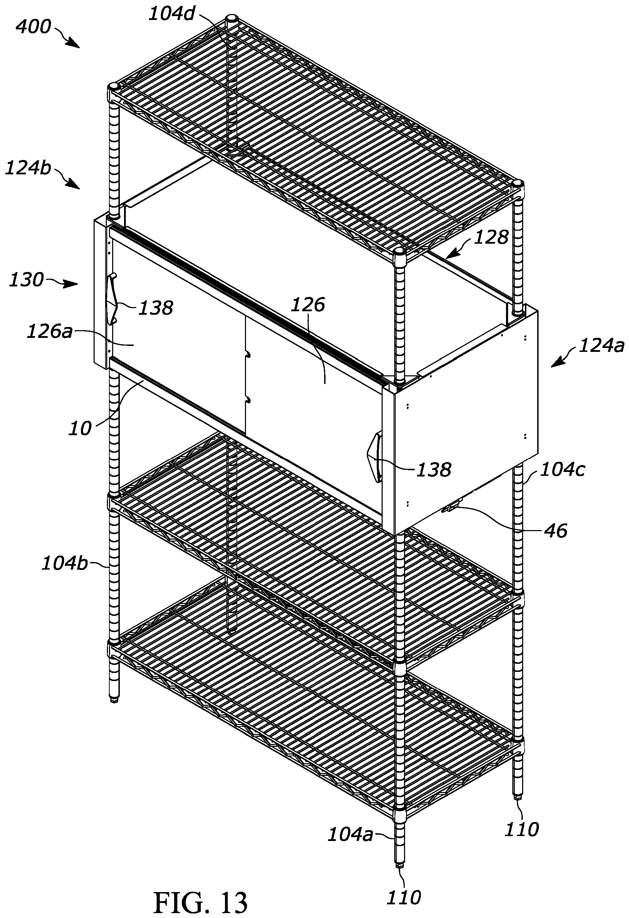

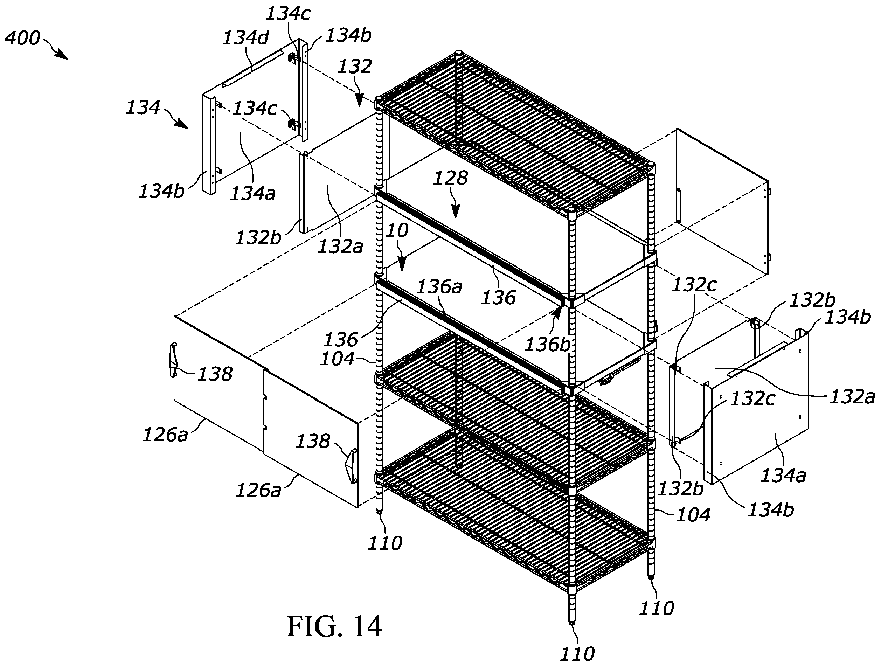

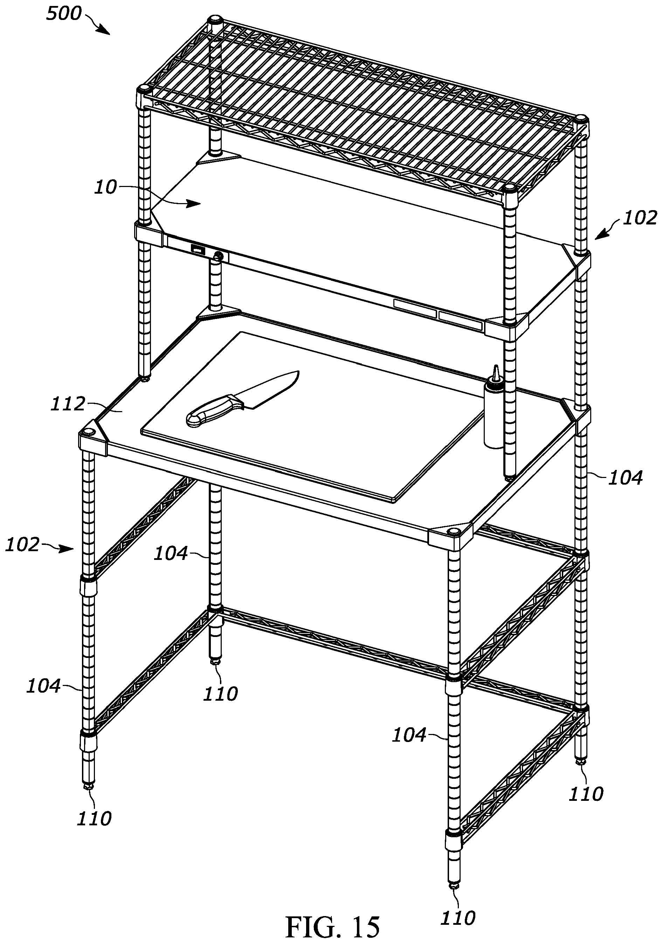

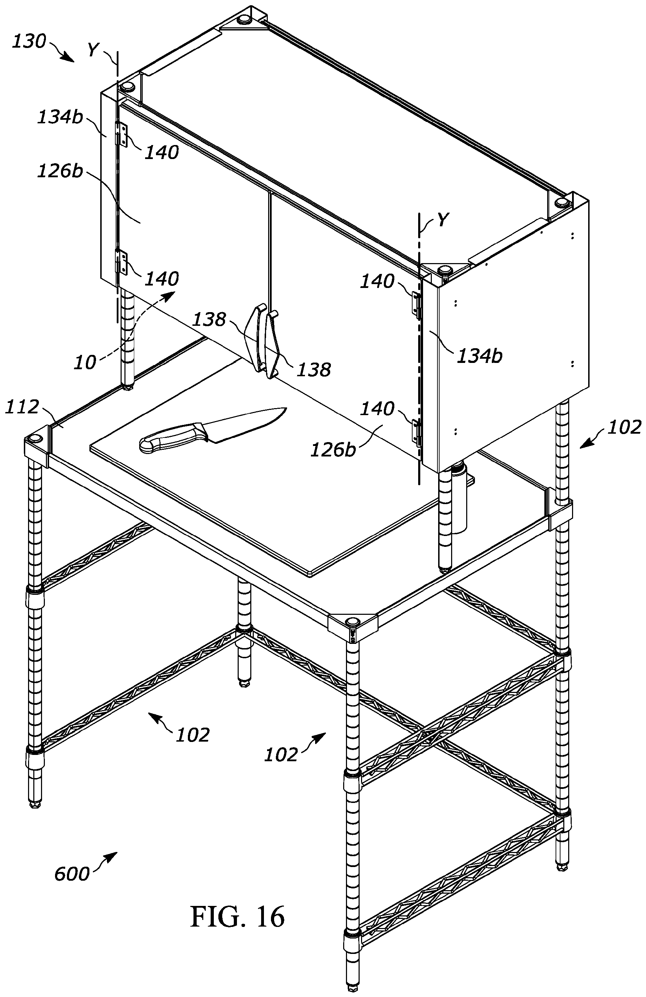

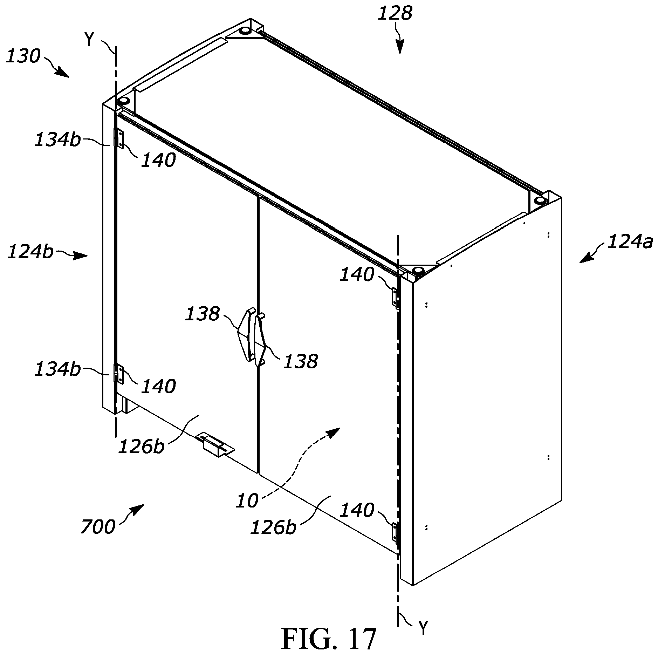

Referring now to the figures, and particularly FIGs. 1-7, a heated shelf assembly 10 is disclosed and is shown herein to be configured for use as a self-contained, standalone, heated counter-top platform for food and the like (e.g., a warmer) or for inclusion as an adjustable/reconfigurable heated shelf in an open and/or closed shelving and/or storage system for food and the like. Additionally, the figures show various shelving and/or storage systems including one or more adjustable, self-contained, heated shelf assemblies as shown in FIGs. 1-7. For example, FIG. 8 shows an open shelving system 100 including adjustable, heated shelves. FIG. 10 shows a closed-end shelving system 200 including adjustable heated shelves. FIGs. 11 and 12 show a closed, cabinet-style shelving system 300 with sliding doors including adjustable heated shelves within the cabinet enclosure. FIGs. 13 and 14 show a combination open and cabinet-style shelving system 400 having sliding doors and including adjustable heated shelves. FIG. 15 shows a perspective view of a workstation 500 including an open shelving system and an adjustable heated shelf. FIG. 16 shows another workstation 600, this workstation including a closed, cabinet-style shelving system with hinged doors and an adjustable heated shelf within the cabinet enclosure. FIG. 17 shows a standalone closed, cabinet-style shelving system 700 having hinged doors and an adjustable heated shelf within the cabinet enclosure.

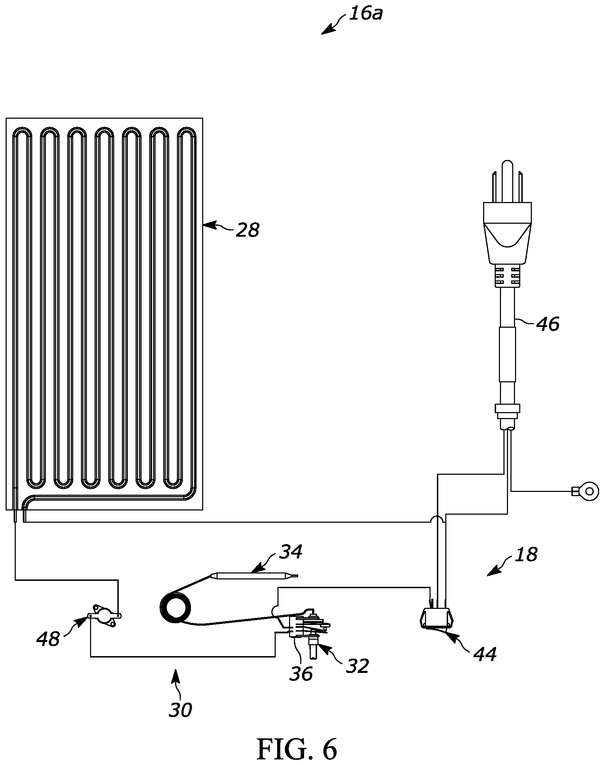

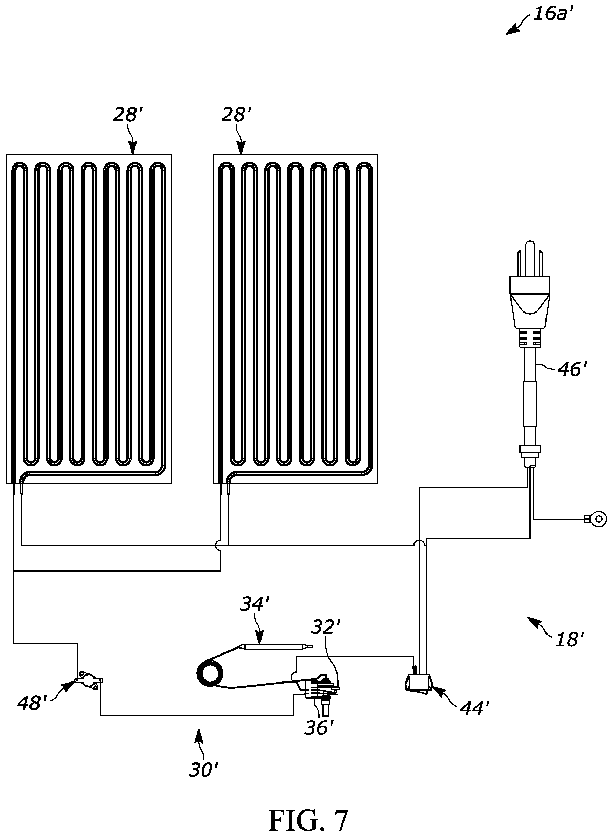

With reference to FIGs. 1-5, a heated shelf assembly 10 not according to the present disclosure is shown. In general, the heated shelf assembly 10 includes a body 12 providing a support surface 14 on which food items may be disposed for warming/keeping warm, a heating system 16 substantially disposed within the body 12 for heating the support surface 14, and a power control 18 for the heating system 16 (best seen in FIGs. 6 and 7).

The shelf body 12 is generally rectangular-shaped having a length L, a width (or depth) W, a height (or thickness) H and four corners. The body 12 may have an upper panel 20, a lower panel 22, a plurality of sidewalls 24 and a plurality of corner mounting structures 26. The upper panel 20 and the lower panel 22 define, respectively, upper and lower boundaries of the body 12, and opposing front, rear, left and right sidewalls 24 (which may or may not be integral with the upper panel 20) extend around the perimeter of the body 12 and define side boundaries of the body 12. The upper and lower panels 20, 22 and sidewalls 24 cooperate to define a hollow, interior space of the body 12. An upper side of the upper panel 20 serves as the support surface 14 on which food items may be disposed for heating or maintaining the food items at a desired warming temperature.

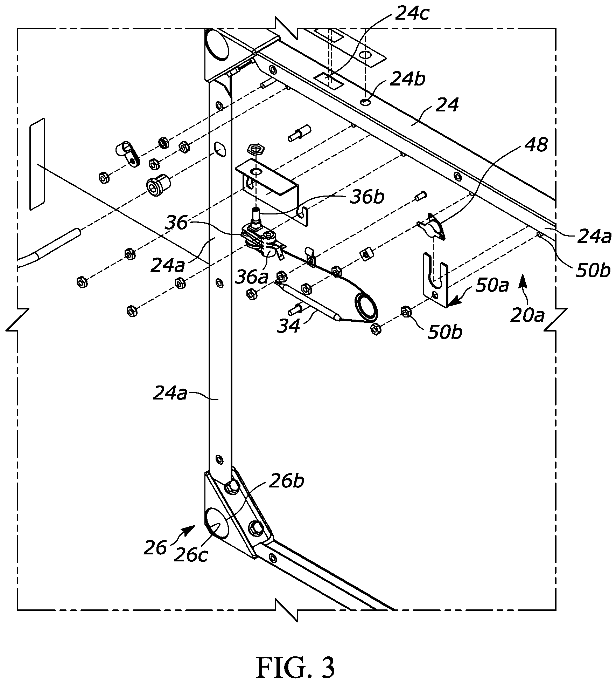

The lower panel 22 may be attached to the upper panel and/or sidewalls 24 (e.g., via fasteners). For example, flange portions 24a of each of the sidewalls 24 (see FIG. 3) may extend inwardly and at least partially overlap the lower panel 22 to allow the lower panel 22 to be attached to the sidewalls 24 with fasteners.

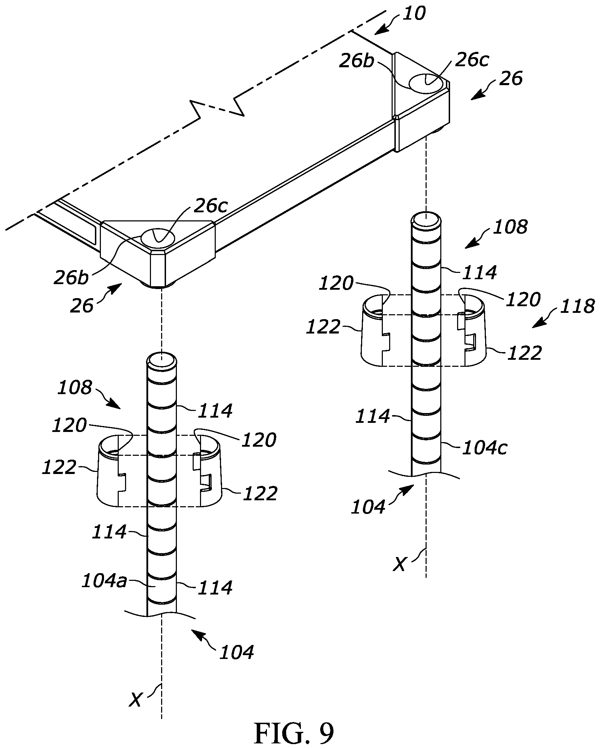

A mounting structure 26 is located at each of the four corners of the rectangular body 12. The mounting structures comprise corner brackets 26a that enable the shelf 10 to be attached to a vertical support post 104 when the shelf is used in a shelving or storage system (see, e.g., FIG. 9), or to attach a support foot 27 (e.g., FIG. 1) when used as a standalone, counter-top warming platform. The corner brackets can be similar or the same to those disclosed in U.S. Patent No. 3,424,111.

The exterior surfaces of the shelf body 12, including the upper panel 20, lower panel 22 and sidewalls 24, may be made of a material that is corrosion resistant, facilitates easy cleaning and is suitable for use in a foodservice environment. One such material is Type 304 stainless steel. Additionally, the corner mounting structures 26 of the shelf may be made from metal and include a durable, epoxy coated exterior surface finish. Preferably, all of the surfaces of the heated shelf assembly 10 enable easy cleaning and, where possible, include a finish which inhibits bacteria growth.

The heating system 16 of the heated shelf assembly 10 is best seen at FIGs. 3, 4 and 6-7. The heating system 16 is disposed substantially within the interior space of the body 12. The heating system 16 operates to generate the heat that increases the temperature of the heated shelf assembly 10 (and, specifically, the support surface 14 of the upper panel 20) to a desired temperature above the ambient temperature (e.g., up to about 200°F (93°C)). The heating system 16 can comprise a heating circuit 16a that can include one or a plurality of heating elements 28 (e.g., a heater coil(s)) and a temperature control device 30. The heating element(s) 28 and temperature control device 30 can be electrically connected to one another and to the power control 18.

As seen in FIGs. 1-4, a temperature control device 30 is included and is operable to control a temperature setting for the heated shelf assembly 10. As shown, the temperature control device 30 can include an adjustable thermostat 32 having a user accessible control dial 33 for setting a desired temperature for the heated shelf assembly 10. The temperature control device 30 is operably electrically connected to the heating element(s) 28 of the heating system 16. Thus, the temperature control device 30 is operable to allow or interrupt electrical power to the heating element(s) 28.

The adjustable thermostat 32 can include a temperature probe 34 and a thermostat switch 36. As is known in the art, the temperature probe 34 detects the ambient temperature of its location and provides a signal response (e.g., a pressure change) to the thermostat switch 36. The thermostat switch 36, in turn, reacts to the signal response to OPEN or CLOSE as appropriate and based upon a temperature setting for the adjustable thermostat 32. For example, as is well known, when the temperature probe 34 detects an ambient temperature at or above the temperature setting of the thermostat 32, the thermostat switch 36 is caused to OPEN and thereby interrupt electrical power to the heating element(s) 28 of the heating system 16 notwithstanding that the heated shelf assembly 10 may be in an ON mode of operation.

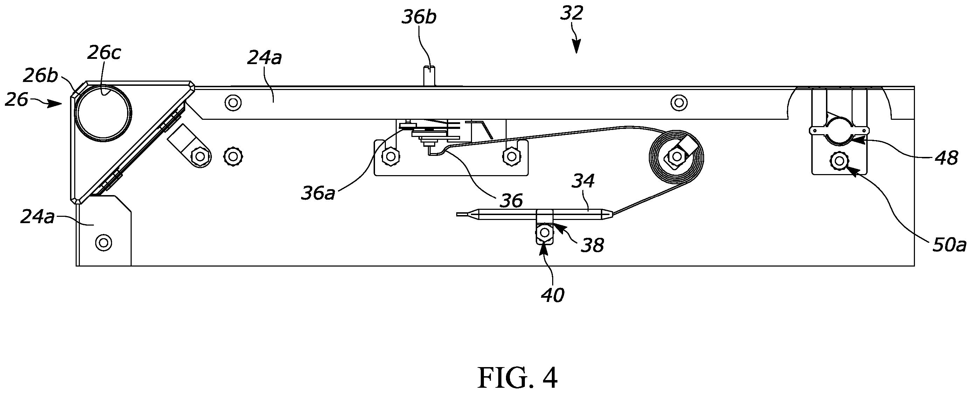

The temperature probe 34 is typically disposed entirely within the interior space of the body 12 of the shelf assembly 10. As seen in FIG. 4, for example, the temperature probe 34 can be mounted at an interior side of the upper panel 20, such as by a clamp 38 and a fastener 40. In an operable position, the temperature probe 34 is in thermal communication with the upper panel 20 of the body 12. As depicted, the temperature probe 34 can lie adjacent to or to abut the inner surface 20a of the upper panel 20 of the body 12 to achieve good thermal conductivity with the upper panel 20 to the temperature probe 34.

The thermostat switch 36 can be at least partially externally located relative to a sidewall 24 heated shelf assembly 10. For example, as shown in FIGs. 1 and 4, a body portion 36a of the thermostat switch 36 may be located or secured to an interior side of a panel 20 or sidewall 24 of the body 12, while the control dial 33 of the thermostat switch 36 may be externally located relative to the body 12 so that the control dial 33 is easily visible and accessible to a user of the heated shelf assembly 10. The control dial 33 may be attached to a post 36b of the thermostat switch 36 that extends through an opening 24b formed in the sidewall 24. The post 36b can, e.g., rotate to adjust the temperature sensitivity of the thermostat switch 36. Based on, e.g., the rotational position or setting of the control dial 33, the temperature at which the thermostat switch 36 will OPEN and CLOSE can be made to vary. A user of the heated shelf assembly 10 may then conveniently adjust the control dial 33 to set a temperature at which the heated shelf assembly 10 is to be heated when the heated shelf assembly 10 is in an ON mode of operation.

In some configurations, a thermostat cover may be provided to shroud the control dial 33 and thereby prevent unintended temperature changes to the heated shelf assembly 10. Additionally or alternatively, the thermostat cover may shroud the power switch 44 such that a user does not accidently switch the heated shelf assembly 10 from the ON mode of operation to the OFF mode of operation.

It should be understood, however, that the particular location and position of the thermostat probe 34 and thermostat switch 36 may be modified for some configurations of the heated shelf assembly 10, and it may be desirable to locate the adjustable thermostat 32 at a position in the heated shelf assembly 10 other than as shown. Moreover, it may be preferred to locate the temperature control device 30 near or in proximity to a power switch 44 of the power control 18.

It should also be understood that the temperature control device 30 may incorporate an adjustable thermostat having a digital (rather than analog) control and/or incorporating other types of temperature probes (e.g., a thermistor). Additionally or alternatively, the temperature control device 30 may incorporate a thermostat operable according to a fixed (rather than adjustable) temperature setting.

The heating element(s) 28 can comprise one or plurality of resistance-type heating coil(s) that are configured to generate heat. The heating element(s) 28 is electrically connected to the temperature control device 30 and to the power control 18, each of which can interrupt electrical power to the heating element(s) 28 in certain circumstances.

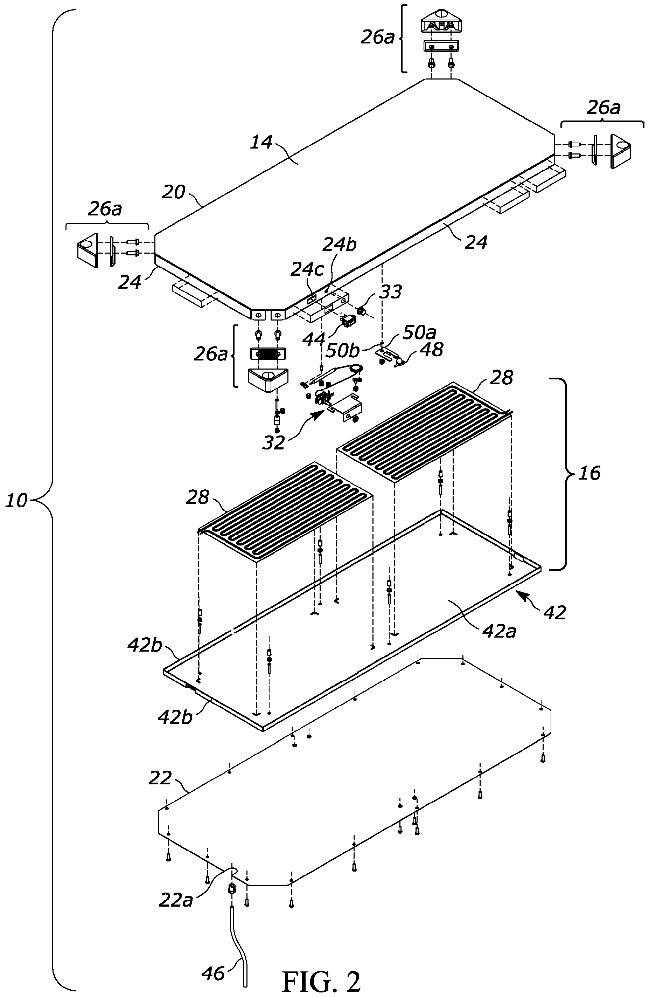

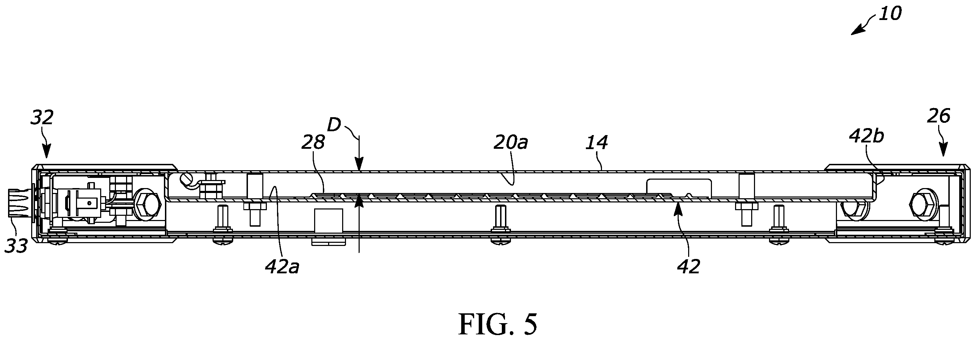

The heating element(s) 28 is in a heat transfer relationship with the upper panel 20 of the body 12 and is operable to heat the support surface 14 upon which food items may be placed. As best understood from FIGs. 2 and 5, the heating element(s) 28 is disposed on and/or attached to an upper side 42a of a tray 42 that is positioned in the interior space intermediate the upper and lower panels 20, 22 of the body. The tray 42 may have a generally rectangular shape and be dimensioned to support the heating element(s) 28 and/or to closely match the shape and size (e.g., width and length) of the support surface 14. The tray 42 may include a peripheral wall or a flange 42b about at least a portion of its perimeter to help locate the tray 42 within the interior space of the body 12. As such, the tray 42 effectively suspends the heating element(s) 28 within the interior space of the body 12 of the heated shelf assembly 10 and spaced at a distance D offset from the upper panel 20 and is not in direct contact with the inner surface 20a of the upper panel 20. In this manner, the heat generated by the heating element(s) 28 is transferred to the upper panel 20 primarily by way of radiant heat transfer. The distance D can be generally between about one-third to about one-half the height H of the shelf body 12.

The tray 42 may be made of a metal (e.g., aluminum or stainless steel). Therefore, the tray 42 can act as a diffuser of the heat generated by the heating element(s) 28. The tray 42 can promote uniform radiation of the heat from the heating element(s) 28 to the upper panel 20 and support surface 14 of the heated shelf assembly 10. This promotes a more even distribution of heat on the support surface 14 and helps to minimize or eliminate the occurrence of localized "hot spots" in the heated shelf assembly 10.

The tray 42 also can shield other components from the heating element(s) 28 and provide some thermal insulation around the heating elements 28. Further, the heated shelf assembly 10 can include a thermal insulator (e.g., a foam insulation panel) that is disposed between the tray 42 and the lower panel 22 of the shelf body 12. The insulator could help to more efficiently direct the heat generated by the heating element(s) 28 to the support surface 14 and shield other portions of the heated shelf assembly 10 from the heating element(s) 28.

The power control 18 can include a power switch 44 and power cord 46 that can be electrically connected to a power source (e.g., the power cord can be plugged into a standard power outlet). Additionally, the power control 18 could optionally include a multi-plug power strip for managing the power cords 46 from multiple heated shelf assemblies 10 (or other appliances) and provide a single power cord connection for plugging into a power outlet.

The power switch 44 can be a multi-position (e.g., two or more) rocker or toggle switch as is well-known in the art. The power switch 44 can be electrically connected to the temperature control device 30 and to the heating element(s) 28. The power switch 44 includes ON and OFF positions (i.e., to enable or disable electrical power to the heating system 16) which correspond to ON and OFF modes of operation of the heated shelf assembly 10.

Like the temperature control dial 33, the power switch 44 may be disposed on a panel 20 or sidewall 24 of the body 12. Preferably the power switch 44 may be at least partially externally located relative to the body 12 so that the power switch 44 is easily visible and accessible to a user of the heated shelf assembly 10 and in close proximity to the temperature control dial 33. For example, as shown in FIG. 1, the power switch 44 may be attached at a sidewall 24 of the body 12 and extend through an opening 24c formed in the sidewall 24 such that a user of the heated shelf assembly 10 may conveniently operate the heated shelf assembly 10 between ON and OFF modes of operation. It should be understood that the particular location and position of the power switch 44 may be modified for some configurations of the heated shelf assembly 10, and it may be desired to locate the power switch 44 on another panel of the body 12 other than as shown.

As seen in FIGs. 1 and 2, the power cord 46 may extend through an opening 22a formed near or at a periphery of the lower panel 22 of the body 12 of the heated shelf assembly 10. The power cord 46 could be a permanently mounted 6 foot (183cm) long cord with a NEMA 5-15P plug end.

FIG. 6 illustrates an exemplary heating circuit 16a of the heating system . As shown, the heating circuit 16a can include the power cord 46, the power switch 44, an adjustable thermostat 32 and a heating coil 28. In addition, the heating circuit 16a can include a temperature sensitive switch or thermal cutoff device (TCO) 48 interposed between the thermostat 32 and the heating coil 28. The temperature sensitive switch 48 is well-known and can function as a thermal fuse in the heating circuit 16a. For example, if the thermostat 32 fails to function properly and the temperature of the support surface 14 increases beyond a desired threshold (e.g., greater than about 220°F), the temperature sensitive switch 48 can OPEN and interrupt the heating circuit 16a and cut off power to the heating coil 28.

As best seen in FIGs. 3 and 4, the temperature sensitive switch 48 can be attached in close proximity to or can abut the interior (i.e., lower) surface 20a of the upper panel 20 of the body 12 of the heated shelf assembly 10. The temperature sensitive switch 48 can be mounted with a bracket 50a and fastener 50b.

FIG. 7 shows an alternative heating circuit 16a' that can be employed in the heating system 16 of the heated shelf assembly 10. Depending on various design considerations (e.g., including the dimensions of the heated shelf assembly and the desired temperature to which the heated shelf assembly may be heated), an alternative heating circuit including two (FIG. 7), three, four or more electrically parallel arranged heating coils may be included in the heating circuit. Further, it can be appreciated that a single heated shelf assembly could also include a plurality of the individual heating circuits 16a such as shown in FIG. 6. Still further, it is contemplated that a heating circuit 16a, 16a' may be configured to individually heat one or more portions of the support surface of the heated shelf assembly) independent of others.

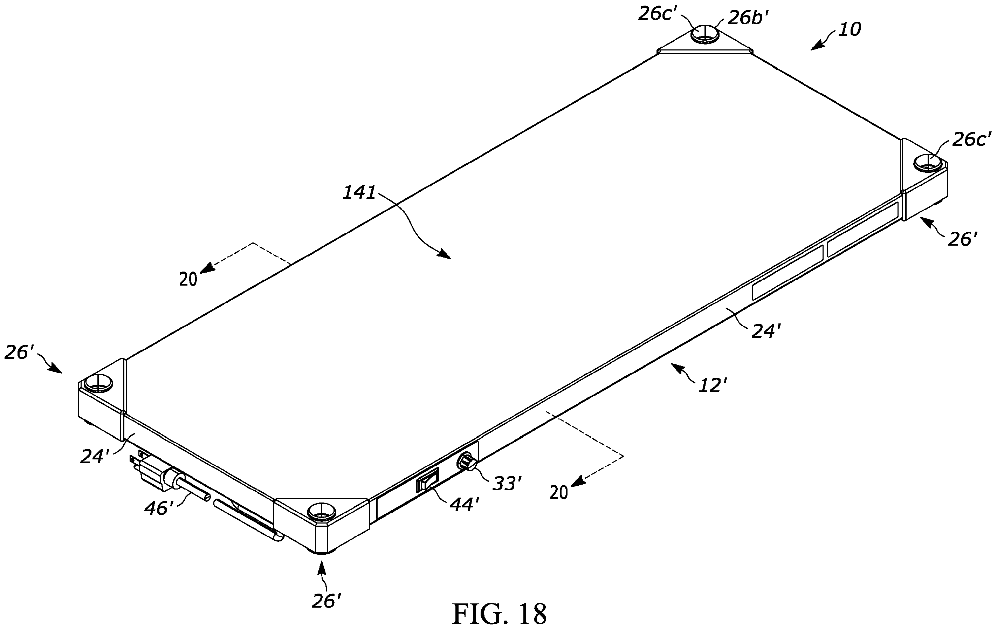

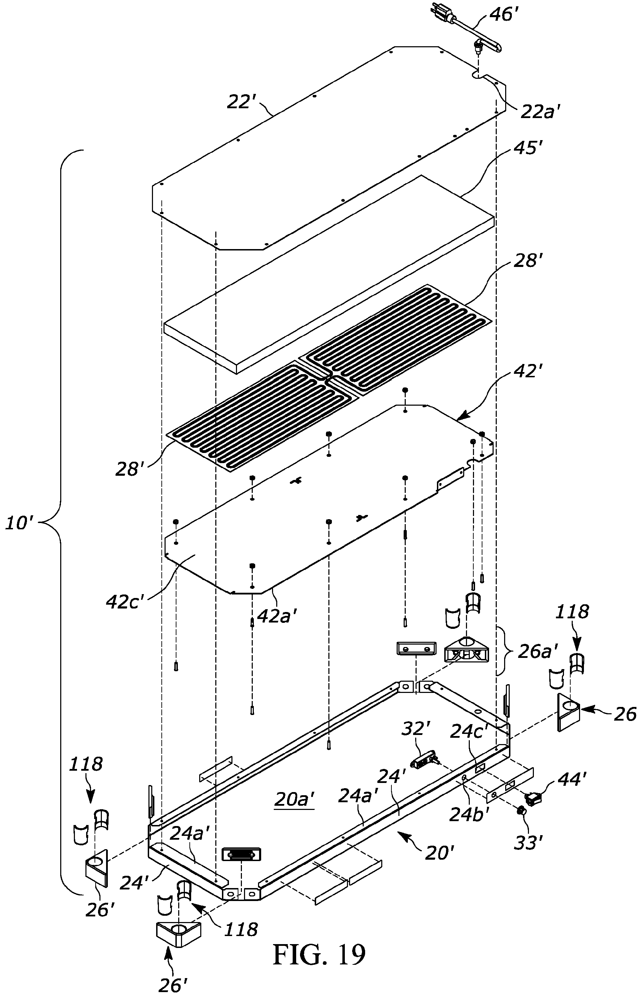

FIGs. 18-20 show an embodiment of a heated shelf assembly 10' according to the disclosure. For clarity, some common components of the shelf assembly 10' have been omitted (e.g., in FIG. 19). Additionally, the exploded view of the heated shelf assembly 10' of FIG. 19 is shown in an inverted orientation. In the heated shelf assembly 10', the heating system 16' can include one or more heating element(s) 28' in a heat transfer relationship with the upper panel 20' of the body 12'. In this embodiment, however, the heat generated by the heating element(s) 28' transfers to the upper panel 20' of the body 12' and support surface 14' of the shelf assembly 10' primarily by way of conduction. That is, the heating element 28' may be configured to be in direct thermal contact with the upper panel 20' of the body 12'.

Alternatively, an optional diffuser plate 42' may be included in the heating system 16' and interposed between the heating element(s) 28' and the interior (lower) surface 20a' of the upper panel 20'. In such a configuration, an upper surface 42a' of the diffuser plate may be attached to the interior (lower) surface 20a' of the upper panel 20' and the heating element(s) 28' may be attached to an opposite, lower side 42c' of the diffuser plate 42'. The diffuser plate 42' may have a generally rectangular shape and be dimensioned to closely match the width and length of the support surface 14'. The diffuser plate 42' may be made of a metal material (e.g., aluminum or stainless steel) and may serve to efficiently and more uniformly distribute the heat conducted from the heating element(s) 28' to the upper panel 20' and support surface 14'.

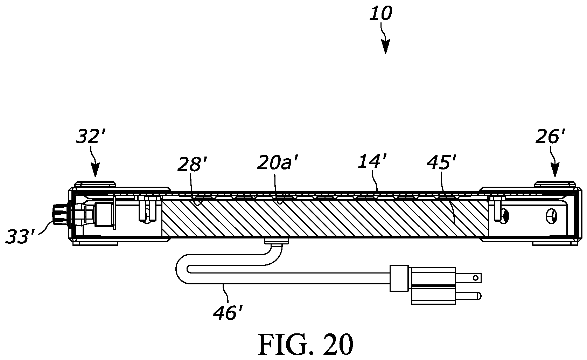

Still further, as best seen in FIGs. 19 and 20, the heated shelf assembly 10' can include a thermal insulator 45' (e.g., a foam insulation panel) that is disposed between the heating element(s) 28' and the lower panel 22' of the shelf body 12'. The insulator 45' can help to more efficiently direct the heat generated by the heating element(s) 28' to the support surface 14' and away from the bottom of the heated shelf assembly 10'.

With reference to FIGs. 8-12, various shelving and/or storage systems 100, 200, 300, 400, 500, 600, 700 incorporating the heated shelf assembly as disclosed herein are illustrated. The various shelving and/or storage systems may be used to store or display food items, such as pre-prepared and/or packaged food items, for example. In this way, the storage systems can be used for a variety of food service applications, such as prepaid self-service carryout orders, grab-and-go orders, and take out or delivery order staging.

The shelving and/or storage systems may generally include a support structure or frame 102 and one or more heated shelf assemblies 10, 10' adjustably and/or reconfigurably supported by the support structure 102 (e.g., FIGs. 8 and 9). A housing enclosing the support structure 102 may also be incorporated (e.g., FIG. 10). Further, one or more compartments can be included and be defined by the one or more heated shelf assemblies 10, 10', the housing and a corresponding one or more door assemblies that can be closed or opened to limit or provide access to the compartments (e.g., FIGs. 11 and 12). It should also be understood that the heated shelf assembly 10, 10' may combined with other known shelving and/or storage systems (e.g., InterMetro Super Erecta^{®} shelving systems) to create standalone heated holding cabinets (e.g., FIG. 17), storage devices with an integrated heated holding cabinet (e.g., FIG. 14), and/or workstations with a heated shelf (FIG. 15) or an integrated heated holding cabinet (e.g., FIG. 16). It should also be understood that, in some configurations, the heated shelf assembly 10, 10' may be used as a standalone heated counter-top unit (i.e., disposed on a work surface and supported by feet, e.g., FIG. 1).

Referring to FIGs. 8 and 9, the support structure 102 can include a plurality of elongated vertical support members or support posts 104, including a front right post 104a, a front left post 104b, a rear right post 104c and a rear left post 104d. As understood from FIGs. 8 and 9, each support post 104 may be a cylindrically shaped column extending vertically along a longitudinal axis X from a lower end 106 to an upper end 108. The lower end 106 is operable to be positioned on and supported by a support surface (e.g., a floor). The lower end 106 may include a cap or foot 110 (e.g., FIGs. 13 and 16) to facilitate stability on the support surface. In some configurations, the lower end 106 may be positioned on and supported by a work surface 112 (see, e.g., FIGs. 15 and 16).

Each support post 104 may include a plurality of annular grooves 114 formed in a cylindrical outer surface 116 of the support post 104. The annular grooves 114 can be positioned along the longitudinal axis X of the support post 104 from the lower end 106 to the upper end 108 with adjacent annular grooves 114 being vertically spaced apart from one another a predetermined distance (e.g., 1 inch).

The support posts 104 in cooperation with the corner brackets 26a, 26a' of the heated shelf assemblies 10, 10' enable the heated shelf assemblies 10, 10' to be incorporated into the shelving and/or storage systems 100, 200, 300, 400, 500, 600, 700. In this respect, the heated shelf assembly 10, 10' can be mounted to the support posts 104 in a manner similar to the shelves described in U.S. Patent No. 3,424,111. Referring to FIG. 9, mounting collars 118 (i.e., split sleeves) are configured to assemble onto the support posts 104. When assembled, an interior rib(s) 120 of the mounting collar 118 engages one or more annular grooves 114 in the support post 104 to fix the mounting collar 118 in a vertical location on the support post 104. The mounting collar 118 has a conically-shaped exterior surface 122. The corner brackets 26a, 26a' can each include an opening or aperture 26b, 26b' having a correspondingly shaped inner conical surface 26c, 26c' that is cooperable with the exterior surface 122 of the mounting collar 118. As such, the apertures 26b, 26b' of the corner brackets 26a, 26a' can engage the exterior surfaces of the mounting collars 118 along the longitudinal axis X of the support posts 104 (i.e., in the vertical direction) and securely attach the shelf 10, 10' to the support posts 104. Even after the shelf 10, 10' is attached to the support posts 104, the position of the shelf 10, 10' can be changed, for example, by repositioning the mounting collars 118 along the support posts 104. Further, the heated shelf assembly 10, 10' can be reconfigured by adding or removing shelves 10, 10' by adding or removing mounting collars 118 to the support posts 104.

Consequently, each heated shelf assembly 10, 10' may be independently adjustable vertically along the support posts 104 without affecting the vertical position any other shelf (heated or otherwise) that may be included in the shelving or storage system. In this way, the functionality and usability of the shelving and/or storage systems 100, 200, 300, 400, 500, 600, 700incorporating the heated shelf assembly 10, 10' are more adaptable to a variety of storage needs or use situations thereby improving the flexibility of the systems. Further, in addition to vertical adjustment, each of the heated shelf assemblies 10, 10' can be separately removed from service in the systems (e.g., for replacement, repair, maintenance, cleaning or to reconfigure the system).

In some implementations of the shelving and/or storage systems, the support structure 102 around the heated shelving assembly 10, 10' can be at least partially enclosed to create a compartment, cabinet or the like, e.g. as shown in FIGs. 10, 11, 13, 16 and 17.

With reference to FIGs. 10, 13, 14 and 17, multiple wall panel assemblies 124, doors 126 and a closed-panel (i.e., not a wire shelf), unheated upper shelf 128 can be attached to the support posts 104 to enclose a space and create a compartment (e.g., a cabinet) 130 around the heated shelf assembly 10, 10'. As illustrated in FIGs. 10 and 14, left and right side panel assemblies 124a, 124b can each include an inner panel 132 and an outer panel 134. The inner panel 132 includes a planar center wall 132a portion and opposing end walls 132b that extend generally perpendicularly from the center wall portion 132a and forming 90° flanges at opposite lateral sides of the center wall portion 132a. One or more spring clips 132c (e.g., broom clips) can also be included on the center wall portion 132a laterally inward of the opposing end walls 132b. The outer panel 134 also includes a planar center wall portion 134a and opposing end walls 134b extending generally perpendicularly from the center wall portion 134a and forming opposed lateral flanges at opposite lateral sides of the center wall portion 134a. The opposed lateral flanges of the outer panel define L-shaped channels. Additionally, the outer panel 134 includes an upper wall 134d extending generally perpendicularly from the center wall portion 134a forming a 90° flange extending from an upper edge of the center wall portion 134a. One or more spring clips 134c are also included on the center wall portion 134a and laterally inward of the opposing end walls 134b.

As can be understood from the figures, the inner and outer panels 132, 134 are configured to attach to the support posts 104 of the shelving and/or storage system in, e.g., a nested relationship. The inner panel 132 can be attached to respective front and rear support posts 104 (e.g., via the spring clips) from a first (e.g., interior) side of the support posts 104. The outer panel 134 can then be attached to the respective front and rear support posts 104 from a second (e.g., exterior) side. As shown, the inner panel 132 can be nested within the outer panel 134 such that the respective flanges each respectively cover the support posts 134 to provide a smooth and aesthetically pleasing appearance to the cabinet 130.

Additionally, the inner and outer panels 132, 134 of the left and right side panel assemblies 124a, 124b can define an interior air space between the panels 132, 134 that can provide thermal insulation to the compartment 130. Still further, the interior air space can be filled with a thermal insulation material (e.g., a foam insulation) to provide even greater thermal insulation to the compartment 130. The wall panel assemblies' interior space can also provide a controlled routing path for and encase the power cord(s) 46, 46' of the heated shelf assembly(ies) 10, 10'.

The wall panel assemblies 124 may be made from, e.g., stainless steel to facilitate easy cleaning, which is important in the food service industry, for example.

The front and/or the rear of the compartment 130 can be enclosed by one or more doors 126. As shown in FIGs. 11-14, the compartment 130 can include two horizontal sliding doors 126a. The doors 126a can be rectangular panels that ride in opposing horizontally-oriented and vertically-spaced upper and lower supports (i.e., tracks) 136 that are affixed to front and/or rear sidewalls 24, 24' of the heated shelf assembly 10, 10'. Each of the doors 126a can be received (e.g., in the direction of arrow A in FIG. 12) in opposing upper and lower grooves 136a, 136b formed in the tracks 136. For example, a first door 126a can be received in opposing first upper and first lower grooves 136a, 136b and a second door 136a, 136b can be received in opposing second upper and second lower grooves 136a, 136b. The first and second upper and lower grooves 136a, 136b can be offset so that the first and second doors 126a lie adjacent to one another in different planes. The first and second doors 126a can then slide in the track 136 independently of one another and in an overlapping manner without interfering or abutting. Each of the first and second doors 126a can move from an OPEN position to a CLOSED position independent of the other. The doors 126a can also include a handle(s) 138 or another interface feature to allow a user to slide the doors 126a along the tracks 136 to open and close access to the compartment 130. It is noted that, alternatively, the sliding doors 126a can be installed by inserting the door 126a into the upper groove 136a of the upper track 136, and then dropping the door 126a into the lower groove 136b of the lower track 136 (e.g., there is enough clearance in the upper grooves 136a to enable this type of installation).

Alternatively, independently operable hinged doors 126b can be incorporated to enclose the front and/or rear of the compartment 130 (e.g., FIGs. 16 and 17). For example, the doors 126b can be pivotable between a closed position and an open position about a vertical axis Y. In one exemplary construction, the hinges 140 can be attached between the door 126b and a side wall panel assembly 124 of the shelving and/or storage system. For example, the door 126b can be attached by hinges 140 to the L-shaped flange of the side panel assembly 124. Additionally, the hinges 140 can include slip hinges and allow the hinged doors 126b to be easily detached and removed from the storage system.

Moreover, the hinged doors 126b may include a closure feature to maintain the doors in a normally closed position. For example, the hinges may be spring-biased such that the bias must be overcome in order to swing the door from the closed to the open position. Upon removal of the opening force, then, the hinge causes the door to return to the closed position. In addition, or alternatively, the doors 126b may also incorporate a latching mechanism, such as a mechanical or magnetic closure element, which can maintain the door in a normally closed position.

Still further, in some configurations, the doors 126 can be pivotable between a closed position and an open position about a horizontal, rather than vertical, axis. In other configurations, a door assembly may be provided to include doors 126 that are both slidable and pivotable, e.g., folding doors, bi-fold doors, or accordion doors, etc. It should be understood that other doors that prevent access to the compartment when in a closed position and allow access to the compartment when in an open position are also contemplated.

Any or all of the doors can be entirely or partially transparent or opaque The doors can also possess a low heat conductivity rating and have thermally insulating properties. The doors can be made of glass, transparent or opaque plastic, or stainless steel. The door supports can also be made of a material having a low heat conductivity rating (e.g., plastic).

The door(s) can also further include one or a plurality of slots that are included along the upper portion and/or the lower portion of the door panel. In this way, the compartment can be vented as may be needed for particular food items (e.g., pizza).

Alternatively, a front side of the cabinet may be enclosed by doors while a rear side of the cabinet may be enclosed by a rear panel assembly similarly configured as the side panel assemblies 124.

Still further, the dimensions of the enclosure components (e.g., the wall panel assemblies and/or doors) can vary to enclose one or a plurality of heated shelf assemblies which may be included in the shelving and/or storage system (e.g., FIGs. 10, 11 and 14). For example, the vertical dimension of the outer panel or doors can span multiple, vertically-spaced heated shelves.

A closed, unheated upper shelf 128 serves to enclose an upper side of the compartment or cabinet 130.

The power cord 46 may be substantially encased or housed within one of the right and left side panel assemblies 124a, 124b. For example, the power cord 46 runs from the heat shelf assembly 10, 10' through the one of the right and left side panel assemblies 124a, 124b to a power strip. In this way, the power cord is hidden from view and can be routed in along a predetermined path and internally to the storage system. When the power cord 46 is plugged into the power strip, the power switch may operate between the OFF mode and the ON mode.

In some configurations, one or more divider wall(s) 142 may be disposed inside the compartment 130 (FIG. 12) and may extend substantially an entire width (i.e., depth) of the compartment 130, thereby separating the compartment into at least a first region 130a and a second region 130b. Each region 130a, 130b may contain food items. The divider wall 142 may be made of a metal material (e.g., stainless steel). The divider 142 may not be attached to or can be insulated from the support surface 14 of the heated shelf assemby 10, to thereby reduce or eliminate any heat transfer from the heated shelf assembly to the divider wall142. In some configurations, the divider wall 142 can be attached to the unheated upper shelf of the compartment 130.

A baseboard 144 (FIG. 10) may be coupled to the lower ends 106 of the posts 104 at a front and/or rear of the shelving and/or storage system. A front baseboard 144 and a rear baseboard 144 may cooperate with the wall panel assemblies 124 to provide an aesthetically pleasing appearance to the shelving and/or storage system. Further, the baseboards 144 can serve to hide electrical connections for the shelving and/or storage system, such as providing a location in which to house the power strip to which each of several heated shelf assemblies may be connected. In some configurations, the power strip may be coupled to an inside surface of a baseboard 144 and may conveniently be accessed via an opening provided in the baseboard.

## Claims

1. A storage system (100, 200, 300, 400, 500, 600, 700) comprising:
four support posts (104);
four mounting collars (118), one mounting collar attachable to each of the support posts, wherein each mounting collar comprises a conical outer surface (122);
a heated shelf (10') connected to and supported by the four support posts, the heated shelf configured to be adjustable along the support posts;
wherein the heated shelf comprises a heatable support surface (114, 114') configured to support food items thereon,
wherein the heated shelf is generally rectangular and comprises four corners, wherein each corner comprises a bracket (26, 26a) including an aperture (26b) extending therethrough and having a conically-shaped inner surface (26c) configured to engage the conical outer surface of a respective mounting collar and enable the heated shelf to be attached to a support post;
wherein the heated shelf comprises:
a body (12, 12') including a plurality of panels (20, 20', 22, 22') fixed to each other and cooperating to define an interior space including an upper panel (20, 20') comprising the heatable support surface and a lower panel (22, 22') attached to the upper panel;
a heating assembly (16, 16') disposed within the interior space of the body and configured to transfer heat to the upper panel of the plurality of panels of the body; and
a temperature control device (30) associated with one of the panels of the body and electrically and thermally coupled to the heating assembly, the temperature control device at least partially externally located relative to the heated shelf and operable to control a temperature of the heatable support surface of the heated shelf;
wherein the heating assembly includes:
at least one heating element (28, 28');
a diffuser plate (42') thermally coupled to the at least one heating element and to the upper panel of the plurality of panels, wherein the diffuser plate uniformly distributes heat from the at least one heating element to the upper panel primarily by conductive heat transfer; and
an insulation material (45') disposed between the at least one heating element and the lower panel configured to substantially reduce heat transfer from the at least one heating element to the lower panel.

2. The storage system of claim 1, further comprising a power switch (44, 44') associated with one of the plurality of panels of the body and operable between an OFF mode to prevent the heated shelf from being heated and an ON mode allowing the heated shelf to be heated.

3. The storage system of claim 1, wherein the at least one heating element is a heating coil.

4. The storage system of claim 1, further comprising a plurality of heated shelves connected to and supported by the four support posts, wherein each heated shelf is independently vertically adjustable along the four support posts.

5. The storage system of claim 4, further comprising a power switch (44, 44') associated with one of the plurality of panels of the body and operable between an OFF mode to prevent the heated shelf from being heated and an ON mode allowing the heated shelf to be heated.

6. The storage system of any of claims 1-5 wherein the storage system is an open shelving system (100) including a plurality of the heated shelves.

7. The storage system of any of claims 1-5 wherein the storage system is a closed end shelving system (200) including a plurality of the heated shelves.

8. The storage system of any of claims 1-5 wherein the storage system is a closed, cabinet-style shelving system (300) with sliding doors (126a) including a plurality of the heated shelves within a cabinet enclosure (130).

9. The storage system of any of claims 1-5 wherein the storage system is a combination open and cabinet-style shelving system (400) having sliding doors (126a) and including a plurality of the heated shelves.

10. The storage system of any of claims 1-5 wherein the storage system is a workstation (500) including an open shelving system and the heated shelf.

11. The storage system of any of claims 1-5 wherein the storage system is a workstation (600) including a closed, cabinet-style shelving system with hinged doors (126b) and the heated shelf within the cabinet enclosure.

12. The storage system of any of claims 1-5 wherein the storage system is a standalone closed, cabinet-style shelving system (700) having hinged doors (126b) and the heated shelf within the cabinet enclosure.

## Patentansprüche

1. Lagersystem (100, 200, 300, 400, 500, 600, 700), umfassend:
vier Stützpfosten (104);
vier Montagebünde (118), wobei ein Montagebund an jeden der Stützpfosten befestigbar ist, wobei jeder Montagebund eine konische Außenfläche (122) umfasst;
ein beheiztes Regal (10'), das mit den vier Stützpfosten verbunden ist und durch diese gestützt wird, wobei das beheizte Regal dazu konfiguriert ist, entlang der Stützpfosten einstellbar zu sein;
wobei das beheizte Regal eine beheizbare Stützfläche (114, 114') umfasst, die dazu konfiguriert ist, Essenswaren darauf zu stützen,
wobei das beheizte Regal im Allgemeinen rechteckig ist und vier Ecken umfasst, wobei jede Ecke einen Bügel (26, 26a) umfasst, der eine sich dadurch erstreckende Öffnung (26b) beinhaltet und eine konisch geformte Innenfläche (26c) aufweist, die dazu konfiguriert ist, die konische Außenfläche eines jeweiligen Montagebunds in Eingriff zu nehmen und es dem beheizten Regal zu ermöglichen, an einen Stützpfosten befestigt zu werden;
wobei das beheizte Regal Folgendes umfasst:
einen Körper (12, 12'), der eine Vielzahl von Paneelen (20, 20', 22, 22') beinhaltet, die aneinander befestigt sind und zusammenwirken, um einen inneren Raum zu definieren, der ein oberes Paneel (20, 20'), das die beheizbare Stützfläche umfasst, und ein unteres Paneel (22, 22'), das an dem oberen Paneel befestigt ist, umfasst;
eine Heizanordnung (16, 16'), die innerhalb des inneren Raums des Körpers angeordnet und dazu konfiguriert ist, Hitze zu dem oberen Paneel der Vielzahl von Paneelen des Körpers zu übertragen; und
eine Temperatursteuerungsvorrichtung (30), die einem der Paneele des Körpers zugeordnet und elektrisch und thermisch mit der Heizanordnung gekoppelt ist, wobei sich die Temperatursteuerungsvorrichtung in Bezug auf das beheizte Regal mindestens teilweise außen befindet und dazu bedienbar ist, eine Temperatur der beheizbaren Stützfläche des beheizten Regals zu steuern;
wobei die Heizanordnung Folgendes beinhaltet:
mindestens ein Heizelement (28, 28');
eine Streuplatte (42'), die mit dem mindestens einen Heizelement und mit dem oberen Paneel der Vielzahl von Paneelen thermisch gekoppelt ist, wobei die Streuplatte Hitze von dem mindestens einen Heizelement an das obere Paneel hauptsächlich durch leitende Hitzeübertragung gleichmäßig verteilt; und
ein Isoliermaterial (45'), das zwischen dem mindestens einen Heizelement und dem unteren Paneel angeordnet ist, das dazu konfiguriert ist, Hitzeübertragung von dem mindestens einen Heizelement an das untere Paneel wesentlich zu verringern.

2. Lagersystem nach Anspruch 1, ferner umfassend einen Leistungsschalter (44, 44'), der einem der Vielzahl von Paneelen des Körpers zugeordnet und zwischen einem AUS-Modus, um zu verhindern, dass das beheizte Regal beheizt wird, und einem EIN-Modus, der erlaubt, dass das beheizte Regal beheizt wird, betreibbar ist.

3. Lagersystem nach Anspruch 1, wobei das mindestens eine Heizelement eine Heizspule ist.

4. Lagersystem nach Anspruch 1, ferner umfassend eine Vielzahl beheizter Regale, die mit den vier Stützpfosten verbunden sind und durch diese gestützt werden, wobei jedes beheizte Regal unabhängig entlang der vier Stützpfosten vertikal einstellbar ist.

5. Lagersystem nach Anspruch 4, ferner umfassend einen Leistungsschalter (44, 44'), der einem der Vielzahl von Paneelen des Körpers zugeordnet und zwischen einem AUS-Modus, um zu verhindern, dass das beheizte Regal beheizt wird, und einem EIN-Modus, der erlaubt, dass das beheizte Regal beheizt wird, betreibbar ist.

6. Lagersystem nach einem der Ansprüche 1-5, wobei das Lagersystem ein offenes Regalsystem (100) ist, das eine Vielzahl der beheizten Regale beinhaltet.

7. Lagersystem nach einem der Ansprüche 1-5, wobei das Lagersystem ein geschlossenes Endregalsystem (200) ist, das eine Vielzahl der beheizten Regale beinhaltet.

8. Lagersystem nach einem der Ansprüche 1-5, wobei das Lagersystem ein geschlossenes, schrankartiges Regalsystem (300) mit Schiebetüren (126a) ist, das eine Vielzahl der beheizten Regale innerhalb eines Schrankgehäuses (130) beinhaltet.

9. Lagersystem nach einem der Ansprüche 1-5, wobei das Lagersystem ein kombiniertes offenes und schrankartiges Regalsystem (400) ist, das Schiebetüren (126a) aufweist und eine Vielzahl der beheizten Regale beinhaltet.

10. Lagersystem nach einem der Ansprüche 1-5, wobei das Lagersystem eine Arbeitsstation (500) ist, die ein offenes Regalsystem und das beheizte Regal beinhaltet.

11. Lagersystem nach einem der Ansprüche 1-5, wobei das Lagersystem eine Arbeitsstation (600) ist, die ein geschlossenes, schrankartiges Regalsystem mit Scharniertüren (126b) und das beheizte Regal innerhalb des Schrankgehäuses beinhaltet.

12. Lagersystem nach einem der Ansprüche 1-5, wobei das Lagersystem ein eigenständiges, geschlossenes, schrankartiges Regalsystem (700) ist, das Scharniertüren (126b) und das beheizte Regal innerhalb des Schrankgehäuses aufweist.

## Revendications

1. Système de stockage (100, 200, 300, 400, 500, 600, 700) comprenant :
quatre montants de support (104) ;
quatre colliers de montage (118), un collier de montage pouvant être fixé à chacun des montants de support, chaque collier de montage comprenant une surface extérieure conique (122) ;
une étagère chauffée (10') reliée aux quatre montants de support et supportée par ceux-ci, l'étagère chauffée étant configurée pour être réglable le long des montants de support ;
dans lequel l'étagère chauffée comprend une surface de support chauffante (114, 114') configurée pour supporter des aliments sur celle-ci,
dans lequel l'étagère chauffée est généralement rectangulaire et comprend quatre coins, chaque coin comprenant un support (26, 26a) comprenant une ouverture (26b) s'étendant à travers celuici et ayant une surface intérieure de forme conique (26c) configurée pour venir en prise avec la surface extérieure conique d'un collier de montage respectif et permettre à l'étagère chauffée d'être fixée à un montant de support ;
dans lequel l'étagère chauffée comprend :
un corps (12, 12') comprenant une pluralité de panneaux (20, 20', 22, 22') fixés les uns aux autres et coopérant pour définir un espace intérieur comprenant un panneau supérieur (20, 20') comprenant la surface de support chauffante et un panneau inférieur (22, 22') fixé au panneau supérieur ;
un ensemble de chauffage (16, 16') disposé dans l'espace intérieur du corps et configuré pour transférer la chaleur au panneau supérieur de la pluralité de panneaux du corps ; et
un dispositif de contrôle de température (30) associé à l'un des panneaux du corps et couplé électriquement et thermiquement à l'ensemble chauffant, le dispositif de contrôle de température étant au moins partiellement situé à l'extérieur par rapport à l'étagère chauffée et pouvant fonctionner pour contrôler une température de la surface de support chauffante de l'étagère chauffée ;
dans lequel l'ensemble de chauffage comprend :
au moins un élément chauffant (28, 28') ;
une plaque de diffusion (42') couplée thermiquement à l'au moins un élément chauffant et au panneau supérieur de la pluralité de panneaux, la plaque de diffusion distribuant uniformément la chaleur de l'au moins un élément chauffant au panneau supérieur principalement par transfert de chaleur par conduction ; et
un matériau isolant (45') disposé entre l'au moins un élément chauffant et le panneau inférieur, conçu pour réduire sensiblement le transfert de chaleur de l'au moins un élément chauffant au panneau inférieur.

2. Système de stockage selon la revendication 1, comprenant en outre un interrupteur d'alimentation (44, 44') associé à l'un de la pluralité de panneaux du corps et pouvant fonctionner entre un mode éteint, OFF, pour empêcher le chauffage de l'étagère chauffée et un mode allumé, ON, permettant le chauffage de l'étagère chauffée.

3. Système de stockage selon la revendication 1, dans lequel l'au moins un élément chauffant est une bobine chauffante.

4. Système de stockage selon la revendication 1, comprenant en outre une pluralité d'étagères chauffées reliées aux quatre montants de support et supportées par ceux-ci, chaque étagère chauffée étant réglable verticalement de manière indépendante le long des quatre montants de support.

5. Système de stockage selon la revendication 4, comprenant en outre un interrupteur d'alimentation (44, 44') associé à l'un de la pluralité de panneaux du corps et pouvant fonctionner entre un mode éteint, OFF, pour empêcher le chauffage de l'étagère chauffée et un mode allumé, ON, permettant le chauffage de l'étagère chauffée.

6. Système de stockage selon l'une quelconque des revendications 1 à 5, dans lequel le système de stockage est un système d'étagères ouvertes (100) comprenant une pluralité d'étagères chauffées.

7. Système de stockage selon l'une quelconque des revendications 1 à 5, dans lequel le système de stockage est un système d'étagères à extrémité fermée (200) comprenant une pluralité d'étagères chauffées.

8. Système de stockage selon l'une quelconque des revendications 1 à 5, dans lequel le système de stockage est un système d'étagères de type armoire fermé (300) avec des portes coulissantes (126a) comprenant une pluralité d'étagères chauffées à l'intérieur d'une enceinte d'armoire (130).

9. Système de stockage selon l'une quelconque des revendications 1 à 5, dans lequel le système de stockage est un système d'étagères de type ouvert et armoire combiné (400) ayant des portes coulissantes (126a) et comprenant une pluralité d'étagères chauffées.

10. Système de stockage selon l'une quelconque des revendications 1 à 5, dans lequel le système de stockage est un poste de travail (500) comprenant un système d'étagères ouvertes et l'étagère chauffée.

11. Système de stockage selon l'une quelconque des revendications 1 à 5, dans lequel le système de stockage est un poste de travail (600) comprenant un système d'étagères de type armoire fermé avec des portes à charnières (126b) et l'étagère chauffée à l'intérieur de l'enceinte d'armoire.

12. Système de stockage selon l'une quelconque des revendications 1 à 5, dans lequel le système de stockage est un système d'étagères de type armoire fermé et autonome (700) comportant des portes à charnières (126b) et l'étagère chauffée à l'intérieur de l'enceinte d'armoire.
